# EUROPÄISCHE PATENTSCHRIFT

(11) **EP 2 678 191 B1**
(45) Veröffentlichungstag und Bekanntmachung des Hinweises auf die Patenterteilung: **23.03.2016**
(21) Anmeldenummer: 11831794.0
(22) Anmeldetag: 16.09.2011
(51) Int. Cl.: B60R 19/48, B60R 21/0136

(54) **AUFPRALLSENSOR MIT EINEM ELASTISCH DEFORMIERBAREN SCHLAUCH UND ZUMINDEST EINEM DRUCKSENSOR**
CRASH SENSOR WITH AN ELASTICALLY DEFORMABLE TUBE AND A PRESSURE SENSOR
CAPTEUR D'IMPACT AVEC UN TUYAU ÉLASTIQUEMENT DÉFORMABLE ET UN CAPTEUR DE PRESSION

(30) Priorität: 22.02.2011 DE 102011011964; 22.02.2011 DE 102011011962
(43) Veröffentlichungstag der Anmeldung: 01.01.2014
(73) Patentinhaber: Continental Automotive GmbH, 30165 Hannover (DE)
(72) Erfinder: GÖTZ, Thomas, 94315 Straubing (DE); PFAU, Lorenz, 93047 Regensburg (DE); TYROLLER, Tobias, 93051 Regensburg (DE); HAUPT, Björg, 93047 Regensburg (DE)
(74) Vertreter: Büchner, Jörg
(86) Internationale Anmeldenummer: PCT/DE2011/001757
(87) Internationale Veröffentlichungsnummer: WO 2012/113362

(56) Entgegenhaltungen:
- EP-A2- 0 937 612
- DE-A1-102006 050 098
- DE-A1-102008 031 672
- DE-A1-102010 018 400

## Beschreibung

Die Erfindung betrifft eine Stoßstange mit einem Aufprallsensor.

Ein Kraftfahrzeug weist dabei mindestens einen, oft auch mehrere Aufprallsensoren zur Erzeugung eines von der Art und/oder Stärke des Aufpralls abhängigen Signals auf.

Ein dazu geeigneter Aufprallsensor besteht beispielsweise aus einem elastisch deformierbaren Schlauch mit einem Hohlraum und zumindest einem Drucksensor zur Erfassung der Druckänderung im Hohlraum des Schlauchs. Derartige Aufprallsensoren dienen in Kraftfahrzeugen der Erkennung von Aufprallsituationen, insbesondere auch der Unterscheidung eines Aufpralls eines Fußgängers von anderen Aufprallereignissen und sind beispielsweise aus der EP 937612 A2, DE 101 37 250 A1, DE 102 32 523 A1, DE 10 2010 018 400 A1 oder DE 101 14 465 A1 bekannt. Der deformierbare Schlauch wird dabei in der Regel großflächig an der Außenseite der Stoßstange angeordnet.

Die Aufgabe der vorliegenden Erfindung ist es, eine besonders geeignete Ausgestaltung einer solchen Stoßstange mit einem solchen Aufprallsensors anzugeben. Diese Aufgabe wird durch die Merkmale des unabhängigen Anspruchs gelöst. Vorteilhafte Weiterbildungen der Erfindung ergeben sind aus den Unteransprüchen.

Ein wesentlicher Gedanke der Erfindung besteht darin, dass , obwohl in der Stoßstange hinter einem Dämpfungskörper angeordnet, der Schlauch des Aufprallsensors einen Innendurchmesser zwischen 2,5 und 6 Millimeter und einen Außendurchmesser kleiner 12 Millimeter aufweist. Schläuche mit solchen Maßen sind zwar im allgemeinen am Markt verfügbar, wurden aber bisher für diese Anwendung nicht in Betracht gezogen.

Ein so kleiner, dünner Schlauch selbst oder sogar insbesondere bei Anordnung hinter einem Dämpfungselement, erweist sich jedoch als besonders geeignet, um ein signifikantes Drucksignal zur Unterscheidung eines Fußgängeraufpralls von einem Aufprall gegen ein starres Hindernis, beispielsweise einen Laternen-Pfosten oder Baum in den vorgegebenen Geschwindigkeitsbereich bereitzustellen.

Dickere Schläuche hätten zwar eine größere Aufprallfläche, wären jedoch bei der hier erforderlichen Länge über die Breite der Stoßstange hinweg nachteilig. Vorzugsweise ist der Schlauch auch nur maximal 2,3 Meter lang.

Der Schlauch 3 muss nicht zwingend gerade verlegt werden, sondern kann auch gebogen werden, sofern ein Biegeradius von mindestens 10, vorzugsweise mehr als 25 mm eingehalten wird.

Der Aufprallsensor ist so in einer Stoßstange montiert, dass der deformierbare Schlauch in Richtung des Aufpralls hinter einem Dämpfungskörper, also jeweils auf der Innenseite zum Fahrzeug hin angeordnet ist. Das mag zunächst Bedenken wegen der Dämpfung des Impulses erwecken, erweist sich jedoch als kein Nachteil, da auch durch den Dämpfungskörper hindurch der Impuls in einem elastischen Schlauch gut nachweisbar ist und zugleich der Schlauch besser gegen Zerstörung geschützt ist.

Der deformierbare Schlauch ist dabei in der Stoßstange in einer Fuge des Dämpfungskörpers und in Richtung des Aufpralls zwischen dem Dämpfungskörper und einem Querträger angeordnet. Der Schlauch liegt damit am Querträger an und wird beim Aufprall gegen diesen gedrückt.

Vernetzter, also vulkanisierter Silikon, auch Silikonkautschuk genannt, erweist sich gegenüber der Vielzahl anderer elastischer Kunststoffe durch besonders gleichmäßige elastische Eigenschaften auch bei unterschiedlichen Umgebungstemperaturen als besonders geeignet für diesen Anwendungsfall. Vorzugsweise wird hochtemperaturvemetztes Silikon mit einer Shore A-Härte gemäß DIN 53505, IN EN ISO 868 zwischen zwischen 40 und 80, besser 50 und 70, vorzugsweise ca. 60 verwendet. Als Silikon-Kautschuktypen sind Methyl-Silikon-Kautschuk (MQ), MFQ, also MQ mit Fluor-Gruppen oder MPQ (MQ mit Phenyl-Gruppen), MVQ (MQ mit Vinyl-Gruppen) oder MPVQ (MQ mit Phenyl- u. Vinyl-Gruppen) (Abkürzungen jeweils gemäß DIN ISO 1629: 1992-03) bevorzugt.

Silikon wird dabei häufig in Anteilen von Katalysatoren, Farbstoffen und anderen Zuschlagsstoffen verwendet, wobei die Gewichtsanteile gering gegenüber dem Silikonanteil sind.

Das Silikon weist dabei vorzugsweise eine Dichte gemäß DIN 53479 ISO/R 1183 von zwischen 1,0 und 1,3 g/cm³, vorzugsweise von 1,16 ± 0,05 g/cm³ auf.

Der Silikonschlauch weist vorzugsweise eine Reißfestigkeit gemäß DIN 53504 ISO/DIS 37 von größer 8 MPa, vorzugsweise sogar größer 9 MPa auf.

Die Erfindung wird nun nachfolgend anhand eines Ausführungsbeispiels unter Zuhilfenahme der Figuren näher erläutert. Im Folgenden können für funktional gleiche und/oder gleiche Elemente mit den gleichen Bezugsziffern bezeichnet sein.

Es zeigen
- Figur 1:: Stoßstange eines Kraftfahrzeugs mit einem Aufprallsensor
- Figur 2:: Querschnitt des Schlauchs des Aufprallsensors
- Figur 3:: Querschnitt durch die Stoßstange mit dem Aufprallsensor vor einem Aufprall
- Figur 4:: Querschnitt durch die Stoßstange mit dem Aufprallsensor während eines Aufpralls

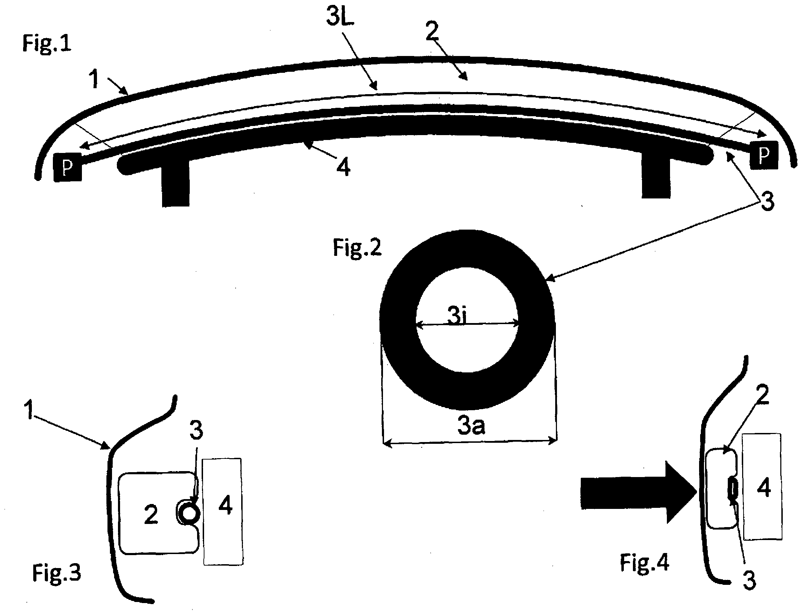

Figur 1 zeigt eine vordere Stoßstange eines Kraftfahrzeugs mit einer äußeren Verkleidung 1, beispielsweise einem Metallblech oder einem Kunststoffformteil. Hinter der äußeren Verkleidung 1 ist ein elastischer Dämpfungskörper 2 angeordnet, hier beispielsweise aus einem Energieabsorberschaum, beispielsweise einem expandierten Polypropylen, oder einem stark verdichteten Styropormaterial besteht. Hinter dem Dämpfungskörper 2 ist der Querträger 4 angeordnet. Die Steifigkeit des Dämpfungskörpers 2 und des Querträger 4 sind dabei so gewählt, dass bei Aufprall mit niedriger Geschwindigkeit vorzugsweise ausschließlich der Dämpfungskörper 2 verformt wird, während der Querträger 4 kaum belastet wird.

Bei Aufprallereignissen mit hoher Geschwindigkeit wird der Querträger 4 mit verformt und verteilt die Aufprallenergie auf weitere Bereiche der Fahrzeug-Karosserie. 1 geformt in eine Fuge des Dämpfungskörpers 2 ist zwischen Dämpfungskörper 2 und Querträger 4 der elastische Schlauch 3 angeordnet, welcher sich über eine Länge 3L der Stossstange erstreckt und zumindest an einer Seite, vorzugsweise an beiden Seiten mit Druck-Sensoren P zur Erfassung der Druckänderung im Hohlraum des Schlauchs verbunden ist.

Wie Figur 2 skizziert, weist der Schlauch 3 dabei einen Innendurchmesser 3i zwischen 2,5 und 6 Millimeter, vorzugsweise ca 4mm und einen Außendurchmesser 3a kleiner 12 Millimeter, vorzugsweise 8 mm auf. Der Schlauchmantel ist daher vorzugsweise ca 2-3 mm dick. Die Maße dieses Schlauches 3 sind überraschend klein im Verhältnis zur Größe der Stoßstange.

Der Schlauch 3 weist eine Länge 3L von kleiner 2,3 Metern auf. Die Länge des Schlauches wirkt sich auf die Laufzeit und das Gesamtvolumen des Hohlraums im Inneren des Schlauchs aus.

Der Schlauch 3 muss nicht zwingend gerade verlegt werden, sondern kann auch gebogen werden, sofern ein Biegeradius von mindestens 10, vorzugsweise 25 mm eingehalten wird.

Dieser Schlauch 3 besteht aus einem vernetzten Silikonmaterial, insbesondere einem Hochtemperatur-Silikonkautschuk und weist eine Shore A-Härte von 60 ± 5 gemäß DIN53505 sowie eine Dichte gemäß DIN 53479 ISO/R 1183 von 1,16 ± 0,05 g/cm³ und eine Reißfestigkeit gemäß DIN 53504 ISO/DIS 37 von größer 9 MPa auf.

Der Schlauch 3 ist vorzugsweise mit Luft gefüllt, wobei alternativ auch eine Füllung mit anderen Gasen oder auch Flüssigkeiten denkbar sind. Über das Gehäuse des Drucksensors erfolgt vorzugsweise verzögert ein Druckausgleich gegenüber der Umgebung.

Figur 3 skizziert nochmal im Querschnitt die Stoßstange mit dem Aufprallsensor im unbelasteten Zustand, also vor einem Aufprall. Trifft im Vergleich dazu in Figur 4 eine durch den Pfeil angedeutete Kraft durch einen Aufprall eines Fußgängers oder eines anderen Kollisionsobjekts auf die Stoßstange, so verformt sich neben der äußeren Verkleidung 1 auch der Dämpfungskörper 2 und wird dabei der Schlauch 3 entsprechend mit verformt und gegen den Querträger 4 gedrückt. Da der Dämpfungskörper 2 beim Aufprall verformt und diesen Druck allseitig weitergibt, reicht ein so dünner Schlauch auch bei einer Anordnung hinter dem Dämpfungskörper aus.

Die Druckänderung im Hohlraum des Schlauchs ist bei einem solchen Schlauch aus Silikonkautschuk mit diesen Abmaßen sehr gut geeignet, um den Aufprall eines Fußgängers zu erkennen und vorzugsweise auch von anderen, steiferen Aufprallobjekten zu unterscheiden.

## Patentansprüche

1. Stoßstange mit einem Aufprallsensor
bestehend aus einem elastisch deformierbaren Schlauch mit einem Hohlraum und zumindest einem Drucksensor zur Erfassung der Druckänderung im Hohlraum des Schlauchs,
wobei der Schlauch einen Innendurchmesser zwischen 2,5 und 6 Millimeter und einen Außendurchmesser kleiner 12 Millimeter aufweist,
wobei der deformierbare Schlauch in der Stoßstange in Richtung des Aufpralls hinter einem Dämpfungskörper (2) in einer Fuge des Dämpfungskörpers (2) und in Richtung des Aufpralls zwischen dem Dämpfungskörper (2) und einem Querträger (4) angeordnet ist, so dass der Schlauch (1) bei einem Aufprall gegen den Querträger (4) gedrückt wird.

2. Stoßstange nach Anspruch 1, **dadurch gekennzeichnet, dass** der Schlauch aus einem vernetzten Silikon, vorzugsweise hochtemperaturvemetzten Silikonkautschuk besteht.

3. Stoßstange nach Anspruch 2, **dadurch gekennzeichnet, dass** das Silikonmaterial eine Shore A-Härte zwischen 40 und 80, vorzugsweise ca. 60 aufweist.

4. Stoßstange nach einem der vorangehenden Ansprüche,, **dadurch gekennzeichnet, dass** der Schlauch mit einem Biegeradius von mindestens 10 mm, vorzugsweise mehr als 25 mm verlegt ist.

## Claims

1. A bumper including an impact sensor
consisting of an elastically deformable hose including a cavity and at least one pressure sensor for measuring the pressure change within the cavity of the hose,
wherein the hose has an inner diameter of between 2.5 and 6 millimetres and an outer diameter of less than 12 millimetres,
wherein the deformable hose is arranged within the bumper, in the direction of the impact, behind a damping body (2) in a gap of the damping body (2) and, in the direction of the impact, between the damping body (2) and a cross-beam (4), so that the hose (1) is pressed against the cross-beam (4) in case of an impact.

2. The bumper according to Claim 1, **characterized in that** the hose consists of a cross-linked silicone, preferably high-temperature cross-linked silicone rubber.

3. The bumper according to Claim 2, **characterized in that** the silicone material has a shore A hardness of between 40 and 80, preferably approx. 60.

4. The bumper according to any one of the preceding claims, **characterized in that** the hose is laid with a bending radius of at least 10 mm, preferably more than 25 mm.

## Revendications

1. Pare-chocs avec un capteur d'impact
composé d'un tuyau élastiquement déformable avec un intérieur creux et d'au moins un capteur de pression pour la détection de la variation de pression dans l'intérieur creux du tuyau,
le tuyau ayant un diamètre intérieur compris entre 2,5 et 6 mm et un diamètre extérieur inférieur à 12 mm,
le tuyau déformable étant disposé dans le pare-chocs derrière un corps amortisseur (2) dans le sens de l'impact, dans un joint du corps amortisseur (2) et entre le corps amortisseur (2) et une traverse (4) dans le sens de l'impact, de telle manière que le tuyau (1) est comprimé contre la traverse (4) en cas d'impact,

2. Pare-chocs selon la revendication 1, **caractérisé en ce que** le tuyau est en silicone réticulé, de préférence en caoutchouc silicone réticulé à haute température.

3. Pare-chocs selon la revendication 2, **caractérisé en ce que** le silicone présente une dureté Shore A comprise entre 40 et 80, de préférence sensiblement égale à 60.

4. Pare-chocs selon l'une des revendications précédentes, **caractérisé en ce que** le tuyau est posé avec un rayon de courbure minimal de 10 mm, de préférence supérieur à 25 mm.
